# EUROPÄISCHE PATENTANMELDUNG

(11) **EP 2 746 002 A1**
(43) Veröffentlichungstag der Anmeldung: **25.06.2014**
(21) Anmeldenummer: 13005638.5
(22) Anmeldetag: 04.12.2013
(51) Int. Cl.: B26B 15/00, A01G 3/037

(54) **Elektrische Schere**

(30) Priorität: 19.12.2012 DE 102012024838
(71) Anmelder: Andreas Stihl AG & Co. KG, 71336 Waiblingen (DE)
(72) Erfinder: Binder, Andreas, D-73728 Esslingen (DE)
(74) Vertreter: Wasmuth, Rolf

(57) **Zusammenfassung**

Die Erfindung betrifft eine elektrische Astschere bestehend aus einem Gehäuse (3) mit einem elektrischen Antriebsmotor (8), über dessen Motorwelle (10) zumindest eine Klinge (5, 6) der Astschere (2) zum Schließen und Öffnen betätigt ist. Der Antriebsmotor (8) wird in Abhängigkeit von einem elektrischen Stellsignal von einer Steuereinheit (9) gesteuert, wobei das elektrische Stellsignal die mechanische Stellung eines manuellen Betätigungsgliedes (12) der Astschere (2) wiedergibt. Um dem Benutzer ein feinfühliges Öffnen und Schließen der Klingen zu ermöglichen, ist vorgesehen, dass das Betätigungsglied (12) translatorisch geführt ist und einen sich längs eines geraden Stellweges erstreckenden Führungskörper (22) hat.

## Beschreibung

Die Erfindung betrifft eine elektrische Schere, insbesondere eine Astschere, Rebschere, Gartenschere oder dgl. nach dem Oberbegriff des Anspruchs 1.

Aus der EP 0 291 431 B1 ist eine Astschere bekannt, in deren Gehäuse ein elektrischer Antriebsmotor angeordnet ist. Über die Motorwelle des Antriebsmotors wird eine Klinge der Schere zum Schließen und Öffnen betätigt, wozu der Antriebsmotor in Abhängigkeit von einem elektrischen Stellsignal von einer Steuereinrichtung angesteuert ist.

Mit der Motorwelle wird eine Antriebsspindel angetrieben, die mit der Klinge in Verbindung steht. An der Antriebsspindel ist ein Betätigungshebel verschwenkbar angelenkt, wobei zwischen der Antriebsspindel und dem Betätigungshebel ein Positionsgeber angeordnet ist. Drückt der Benutzer den Betätigungshebel nieder, wird der Positionsgeber aus seiner Ruhelage ausgelenkt und zur Kompensation der Auslenkung der Elektromotor in einer derartigen Drehrichtung betrieben, dass das Treibglied auf der Arbeitsspindel die Auslenkung des Positionsgebers ausgleichen kann.

Der Betätigungshebel beschreibt um seine Anlenkachse eine Schwenkbewegung, weshalb zwischen dem Finger eines Benutzers und dem Betätigungshebel eine Relativverschiebung auftritt, die als unangenehm empfunden wird. Daneben ergibt sich durch die Art der Ansteuerung über den im Treibglied integrierten Sensor eine relativ ungenaue, weiche Steuerung, weshalb der Benutzer die Betätigung der Schere als unpraktisch empfindet. Der Erfindung liegt die Aufgabe zugrunde, eine elektrische Schere der gattungsgemäßen Art derart weiterzubilden, dass der Benutzer mit dem Betätigungsglied eine präzise Steuerung der Klingen mit unmittelbarer Rückmeldung ausführen kann.

Die Aufgabe wird erfindungsgemäß nach den Merkmalen des Anspruchs 1 gelöst.

Das Betätigungsglied ist translatorisch geführt und weist hierzu einen längs eines geraden Stellweges sich erstreckenden Führungskörper auf. Die translatorische Führung des Betätigungshebels entspricht der Bewegung des Auslösefingers des Benutzers, so dass Relativverschiebungen zwischen dem Betätigungshebel und dem Finger des Benutzers weitgehend ausgeschlossen werden können. Die translatorische Verschiebung des Betätigungsgliedes benötigt keinen großen Bauraum, so dass eine schlanke Bauweise der Schere möglich ist. Das Gehäuse kann daher ohne wesentliche bauliche Einschränkungen nach den ergonomischen Verhältnissen eines Handgriffs gestaltet werden.

Der translatorische Stellweg des Betätigungsgliedes und der Schließwinkel der Klingen sind voneinander abhängig, vorzugsweise direkt voneinander abhängig. Der Benutzer erhält so in jeder Lage des Betätigungsgliedes eine unmittelbare optische Rückmeldung über die Lage der Klingen zueinander, so dass er ein direktes, präzises Schneidgefühl erfährt. In besonderer Ausgestaltung der Erfindung ist der translatorische Stellweg des Betätigungsgliedes zum Schließwinkel der Klingen etwa proportional. Dabei sind leichte Abweichungen von einer direkt proportionalen Kennlinie zulässig.

Da die Verschiebung des Betätigungshebels auf einer geraden Bahn erfolgt, kann der Benutzer in einfacher Weise durch Verlagerung des Betätigungshebels den Schließwinkel der Klingen der Schere bestimmen, wodurch eine gute Rückmeldung gegeben ist.

Vorteilhaft wird der Führungskörper des Betätigungsgliedes in einer Kulisse geführt, die im Gehäuse der Schere liegt. Dabei kann die Kulisse unmittelbar im Gehäuse ausgebildet sein oder aber in einem Kulissenkörper, der in das Gehäuse eingesetzt wird.

Der Führungskörper ist zwischen einer ersten Führungsbahn und einer zweiten Führungsbahn geführt, die einander gegenüberliegen und sich längs des Stellweges des Betätigungsgliedes erstrecken. Dabei ist die Ausbildung so getroffen, dass der Führungskörper mit Spiel zwischen den Führungsbahnen liegt und sich der Führungskörper selbst an dem einen Ende lediglich mit einem ersten Abstützglied an der ersten Führungsbahn und an dem anderen Ende lediglich mit einem zweiten Abstützglied an der zweiten Führungsbahn abstützt. Dadurch ist bei leichter Führung eine ausreichend präzise Abstützung des Betätigungshebels gewährleistet, wobei selbst eindringender Schmutz die Leichtgängigkeit des axial zu verschiebenden Führungskörpers kaum beeinträchtigen kann.

Die an den Enden des Führungskörpers angeordneten Abstützglieder liegen derart, dass das erste Abstützglied auf der einen Längsseite einer Längsmittelachse des Führungskörpers liegt und das zweite Abstützglied auf der anderen Seite der Längsmittelachse liegt.

Eine gute Leichtgängigkeit wird erzielt, wenn die Abstützglieder als Rollen, Walzen oder dgl. Rollkörper ausgeführt sind. Auch kann die Abstützung über eine bewegliche Kugel oder dgl. zweckmäßig sein.

In Weiterbildung der Erfindung ist an einem Ende des Führungskörpers eine Rückstellkraft eingeleitet, die das Betätigungsglied in seine Ausgangsstellung zwingt. Durch die Federkraft wird zugleich gewährleistet, dass die Abstützglieder des Führungskörpers an den jeweiligen Führungsflächen anliegen. Hierzu ist der Krafteinleitungspunkt der Rückstellkraft in einem Abstand zur Längsmittelachse des Führungskörpers vorgesehen, so dass ein um den ersten Abstützpunkt drehendes Moment aufgebracht wird, wodurch auch das zweite Abstützglied an der zweiten Führungsbahn spielfrei anliegt.

Das Betätigungsglied ist einteilig mit dem in der Kulisse translatorisch geführten Führungskörper ausgebildet, wobei das Betätigungsglied in Weiterbildung der Erfindung durch einen Schlitz in der Kulisse ragt und der Anfang und das Ende des Schlitzes einen vorderen und einen hinteren Anschlag für den Verschiebeweg des Betätigungsgliedes bilden.

Weitere Merkmale der Erfindung ergeben sich aus den weiteren Ansprüchen, der Beschreibung und der Zeichnung, in der ein Ausführungsbeispiel der Erfindung im Einzelnen beschrieben ist. Es zeigen:
- Fig. 1: in schematischer Darstellung eine elektrische Schere,
- Fig. 2: eine Seitenansicht auf die elektrische Schere nach Fig. 1 mit im Gehäuse schematisch angedeuteten Gerätekomponenten,
- Fig. 3: eine Seitenansicht gemäß Fig. 2 mit im Bereich des Betätigungsgliedes teilgeöffnetem Gehäuse,
- Fig. 4: in vergrößerter Darstellung den geöffneten Gehäuseabschnitt mit dem Betätigungsglied nach Fig. 3,
- Fig. 5: ein schematisches Diagramm zum Öffnungswinkel der Klingen mit Bezug zum Stellweg des Betätigungsgliedes.

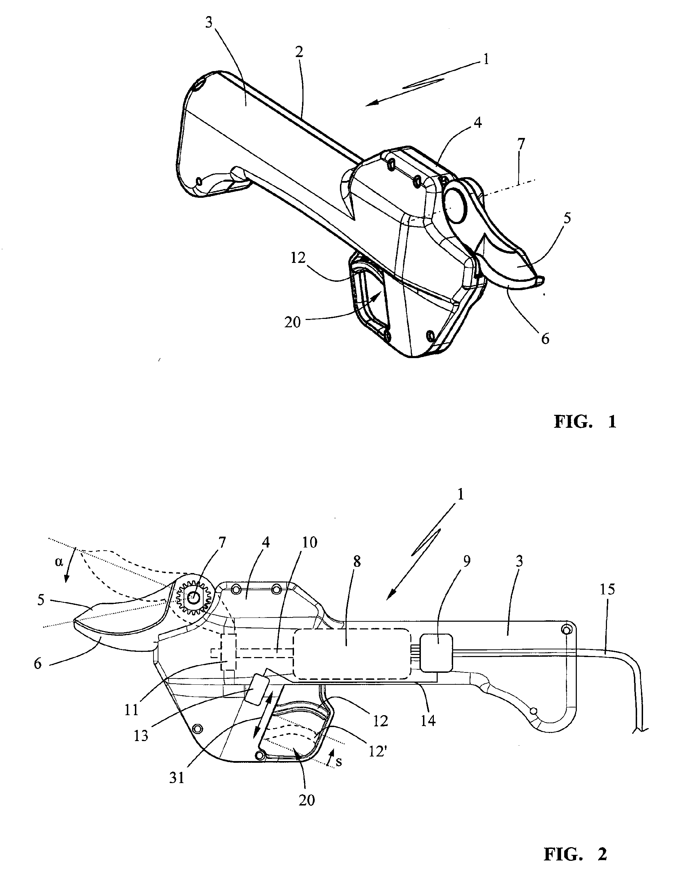

Die in Fig. 1 gezeigte elektrische Schere ist als Astschere 2, Rebschere Gartenschere oder dgl. Schere ausgebildet; derartige Scheren 1 werden z. B. in Gärten oder Weinbergen verwendet. Die Schere 1 besteht im Wesentlichen aus einem Gehäuse 3, welches zugleich als Handgriff ausgebildet ist. Im Bereich des Kopfes 4 sind die Klingen 5 und 6 der Schere vorgesehen. Im gezeigten Ausführungsbeispiel steht die Klinge 6 fest; die Klinge 5 wird relativ zur Klinge 6 um eine Klingenachse 7 verschwenkt.

Die Schere 1 bzw. Astschere 2 ist eine elektrische Schere, die zweckmäßig aus einem nicht dargestellten Akkupack mit elektrischer Energie versorgt wird. Wie aus der Seitenansicht nach Fig. 2 ersichtlich, ist im Gehäuse 3 der Schere 1 ein elektrischer Antriebsmotor 8 aufgenommen, der von einer Steuereinheit 9 gesteuert ist. Die Motorwelle 10 treibt eine Spindel an, auf der ein Treibglied 11 aufgeschraubt ist. Das Treibglied 11 steht mit der beweglichen Klinge 5 in Verbindung, so dass die Klingen 5 und 6 in der einen Drehrichtung des elektrischen Antriebsmotors 8 geöffnet und in der anderen Drehrichtung des elektrischen Antriebsmotors 8 geschlossen werden. Die von einem Benutzer gehaltene Schere 1 wird durch Drücken eines Betätigungsgliedes 12 bedient. Zur Abtastung der Stellung des Betätigungsgliedes 12 ist - vorzugsweise im Gehäuse 3 der Schere 2 - ein Stellungssensor 13 vorgesehen, dessen elektrisches Stellsignal die mechanische Stellung des manuellen Betätigungsgliedes 12 wiedergibt.

Das elektrische Stellsignal wird über eine Signalleitung 14 der Steuereinheit 9 übermittelt, die entsprechend dem elektrischen Stellsignal den elektrischen Antriebsmotor 8 steuert. Die elektrische Energie zum Betrieb des Antriebsmotors 8 wird der Steuereinheit 9 über ein elektrisches Anschlusskabel 15, z. B. von einem am Körper des Benutzers getragenen Akkupack, zugeführt. Es kann zweckmäßig sein, im Gehäuse 3 der Schere 1 einen Aufnahmeschacht für einen Akkupack vorzusehen.

In Fig. 2 ist in durchgezogenen Linien die Stellung des Betätigungsgliedes 12 bei geschlossenen Klingen 5 und 6 gezeigt. Die strichlierten Linien zeigen die geöffneten Klingen 5 und 6, wobei in dieser offenen Stellung das Betätigungsglied die Stellung 12' hat. Entsprechend dem Weg s der translatorischen Verlagerung des Betätigungsgliedes 12 wird die bewegliche Klinge 5 um einen Schließwinkel α verstellt. Zwischen dem Betätigungsglied 12 und der Klinge ist eine direkte elektromechanische Kopplung gegeben.

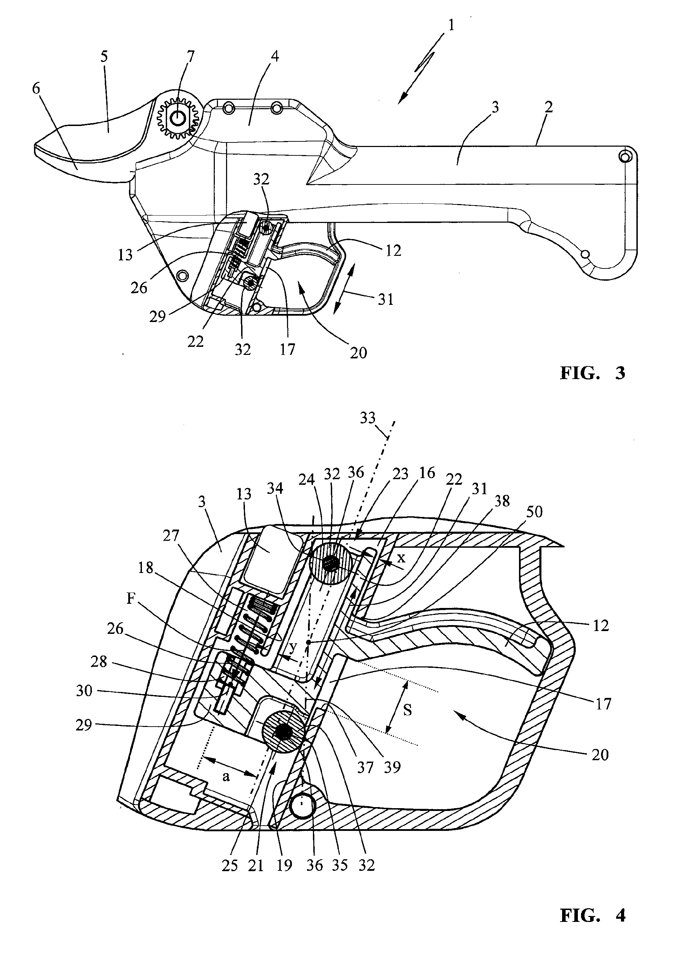

Wie sich aus den Darstellungen der Figuren 3 und 4 ergibt, ist das Betätigungsglied 12 mit einem Führungskörper 22 verbunden, der in einer Kulisse 16 im Gehäuse 3 der Schere 1 geführt ist. Das Betätigungsglied 12 ist als Fingerhebel ausgebildet und durchragt einen Schlitz 17 des Gehäuses 3. Das Betätigungsglied 12 ist etwa mittig an dem langgestreckten Führungskörper 22 befestigt; vorzugsweise sind der Führungskörper 22 und das Betätigungsglied 12 einteilig gefertigt und bilden ein Stellglied 20.

Die Kulisse 16 ist als vom übrigen Gehäuse 3 getrennte Kammer ausgebildet, die den Führungskörper 22 schützend umgibt. Das Betätigungsglied 12 und der Führungskörper 22 bilden das vom Benutzer manuell zu bedienende Stellglied 20 zum Öffnen und Schließen der Klingen 5, 6 der Schere 1.

Wie in der vergrößerten Darstellung in Fig. 4 gezeigt, weist die Kulisse 16 eine erste Führungsbahn 18 und eine zweite Führungsbahn 19 auf. Die zweite Führungsbahn 19 liegt auf der einen Flachseite des Führungskörpers 22 auf Seiten des Betätigungsgliedes 12 und weist den Schlitz 17 auf, der vom Betätigungsglied 12 durchragt ist. Die erste Führungsbahn 18 liegt der zweiten Führungsbahn 19 auf der anderen Seite des Führungskörpers 22 gegenüber. Beide Führungsbahnen 18 und 19 sind zweckmäßig planparallel ausgebildet; es kann vorteilhaft sein, in einer Führungsbahn 18, 19 eine Führungsrille, einen Führungswulst oder dgl. zur Führung des Führungskörpers 22 vorzusehen.

Der Führungskörper 22 liegt jeweils mit Spiel x bzw. y zu den Führungsbahnen 18 und 19. Zur Abstützung des Führungskörpers 22 sind an seinen Enden 21 und 23 Abstützglieder 24 und 25 vorgesehen. An dem einen Ende 23 des Führungskörpers ist ein erstes Abstützglied 24 vorgesehen, welches sich an der ersten Führungsbahn 18 abstützt. An dem anderen Ende 21 des Führungskörpers 22 ist ein zweites Abstützglied 25 vorgesehen, welches sich an der zweiten Führungsbahn 19 abstützt. Das in Seitenansicht etwa T-förmige Stellglied 20 liegt somit mit Spiel in der Kulisse 16 und stützt sich endseitig über je ein Abstützglied 24 bzw. 25 auf der zugeordneten Führungsbahn 18, 19 ab.

Um das Stellglied 20 in seine Ausgangsstellung zurückzustellen - in den Figuren 3 und 4 ist das Stellglied 20 bis zum Anschlag betätigt -, ist eine Rückstellfeder 26 vorgesehen, die zweckmäßig als Schraubenfeder ausgebildet ist. Die Rückstellfeder 26 ist mit ihrem einen Ende in einer Aufnahme 27 des Gehäuses 3 gehalten und liegt mit ihrem anderen Ende in einer Gegenaufnahme 28 des Führungskörpers 22. Die Gegenaufnahme 28 ist in einem Ansatz 29 des Führungskörpers ausgebildet, so dass der Führungskörper 22 in Seitenansicht etwa die Form eines liegenden L aufweist. Der Ansatz 29 liegt an dem anderen Ende 21 des Führungskörpers 22 oberhalb des zweiten Abstützgliedes 25, wobei der Krafteinleitungspunkt 30 der Rückstellkraft F in einem Abstand a zur Längsmittelachse 33 des Führungskörpers 22 liegt. Die Rückstellkraft F übt auf den Führungskörper 22 ein Drehmoment F x a um das zweite Abstützglied 25 aus. Dadurch wird erreicht, dass einerseits das zweite Abstützglied 25 auf seine zugeordnete zweite Führungsbahn 19 aufgedrückt wird und darüber hinaus - aufgrund des wirkenden Drehmomentes F x a - das erste Abstützglied 24 an die ihm zugeordnete erste Führungsbahn 18 angedrückt wird. Trotz des großzügigen Spiels x und y der Seitenflächen des Führungskörpers 22 zu den Führungsbahnen 18 und 19 wird aufgrund der wirkenden Rückstellkraft F der Rückstellfeder 26 bei der translatorischen Bewegung längs eines geraden Stellweges 31 eine spielfreie Führung des Führungskörpers 22 und damit des Stellgliedes 20 erzielt.

Das erste Abstützglied 24 ist - bezogen auf die Längsmittelachse 33 des Führungskörpers 22 - auf der einen Seite der Längsmittelachse 33 vorgesehen, während das zweite Abstützglied 25 auf der anderen Seite der Längsmittelachse 33 liegt. Die Abstützglieder 24 und 25 sind dabei vorteilhaft als Rollen 32 oder Walzen ausgeführt, die um eine im Führungskörper 22 gehaltene Achse 36 drehen.

Die Abstützglieder 24 und 25 wirken in je einem Abstützpunkt 34 und 35 gemäß Seitenansicht in Fig. 4 auf die Führungsbahnen 18 und 19. Eine Verbindungslinie 39 der Abstützpunkte 34 und 35 schneidet die Längsmittelachse 33 etwa in der Längsmitte 50 des Führungskörpers 22. Im Bereich der Längsmitte 50 ist das Betätigungsglied 12 am Führungskörper 22 angebracht.

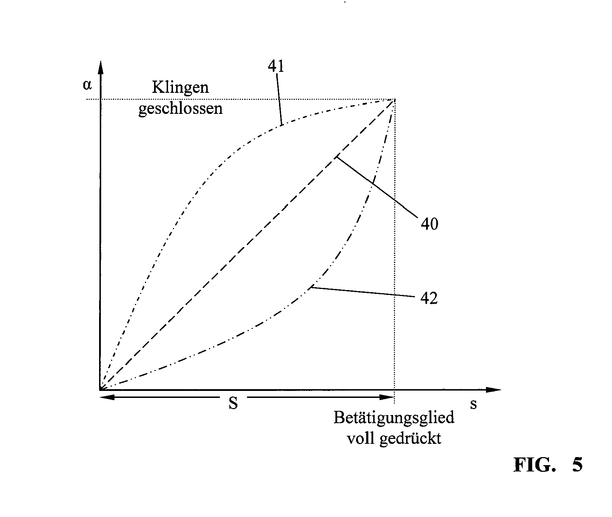

Das Stellglied 20 wird somit bei Drücken des Betätigungsgliedes 12 translatorisch innerhalb der Kulisse 16 geführt, wobei sich der Führungskörper 22 längs des geraden Stellweges 31 erstreckt. Lässt der Benutzer das Betätigungsglied 12 los, wird der Führungskörper 22 - zusammen mit dem Betätigungsglied 12 - durch die Rückstellkraft F in Richtung des anderen Endes 21 verschoben, bis das Betätigungsglied 12 am vorderen Anschlag 37 des Schlitzes 17 anliegt (strichlierte Darstellung in Fig. 2). In dieser Stellung nehmen die Klingen 5 und 6 die in Fig. 2 strichliert gezeigte Öffnungsstellung ein. Der Gesamthub S des Stellgliedes 20 bzw. des Betätigungsgliedes 12 steht in direkter Beziehung zum Schließwinkel α der Klingen 5 und 6. Wird der Betätigungsglied 12 vom Benutzer gedrückt, ergibt sich ein Verschiebeweg s, dem über die Steuereinheit 9 ein entsprechender Schließwinkel α der Klingen 5 und 6 zugeordnet ist. Wie in der schematischen Darstellung in Fig. 5 gezeigt, ist auf der x-Achse der Verschiebeweg s und auf der y-Achse der Schließwinkel α aufgetragen. Abhängig von der Auslegung Steuereinheit 9 kann der translatorische Verschiebeweg s, also der Stellweg S direkt proportional zum Schließwinkel α der Klingen 5, 6 ausgelegt werden, wie die Gerade 40 zeigt.

Es kann vorteilhaft sein, beim Start ein schnelleres Schließen der Klingen 5 und 6 auszuführen, wie die Kurve 41 zeigt. Zweckmäßig ist auch die Beziehung zwischen dem Verschiebeweg s und dem Schließwinkel α gemäß Kurve 42, nach der erst zum Schluss des Gesamthubes S ein rasches Schließen der Klingen 5 und 6 erzeugt wird.

Wesentlich bei der Auslegung der Gerade 40 bzw. der Kurven 41 und 42 ist das subjektive Empfinden des Benutzers. Durch die translatorische Bewegung des Stellgliedes 20 ist gewährleistet, dass der Benutzer eine feinfühlige Steuerung der Klingen ausführen kann, wobei der Schließwinkel α der Klingen etwa proportional der Stellung des Betätigungsgliedes 12 erfolgt. Drückt der Benutzer das Betätigungsglied 12, wird der Antriebsmotor 8 von der Steuereinheit 9 in die eine Drehrichtung bewegt und die Klinge 5 schließt; lässt der Benutzer das Betätigungsglied 12 frei, wird es von der Rückstellfeder 26 zurückgestellt und der Antriebsmotor 8 in die andere Drehrichtung angetrieben, so dass die Klinge 5 öffnet.

Die mechanische Stellung des manuellen Betätigungsgliedes 12 der Schere 1 muss in ein elektrisches Stellsignal umgesetzt werden, welches von der Steuereinheit 9 verarbeitet werden kann. Hierzu ist der Stellungssensor 13 angedeutet, der die Lage des Führungskörpers 22 relativ zum Stellungssensor 13 abtastet und ein entsprechendes Ausgangssignal abgibt. Der Stellungssensor 13 kann ein berührungsloser Sensor, z.B. ein induktiver, ein kapazitiver oder ein elektromagnetischer Sensor (Hallsensor) sein; es kann auch zweckmäßig sein, mit dem Führungskörper 22 ein Schleifglied oder dgl. zu betätigen, um ein elektrisches Stellungssignal des Führungskörpers 22 zu erhalten.

## Patentansprüche

1. Elektrische Schere, insbesondere Astschere, Rebschere oder Gartenschere, bestehend aus einem Gehäuse (3) mit einem elektrischen Antriebsmotor (8), über dessen Motorwelle (10) zumindest eine Klinge (6) der Schere (1) zum Schließen und Öffnen betätigt ist, und der Antriebsmotor (8) in Abhängigkeit von einem elektrischen Stellsignal von einer Steuereinheit (9) gesteuert ist, wobei das elektrische Stellsignal die mechanische Stellung eines manuellen Betätigungsgliedes (12) der Schere (1) wiedergibt,
**dadurch gekennzeichnet, dass** das Betätigungsglied (12) translatorisch geführt ist und einen sich längs eines geraden Stellweges (31) erstreckenden Führungskörper (22) hat.

2. Schere nach Anspruch 1,
**dadurch gekennzeichnet, dass** der translatorische Stellweg (31) des Betätigungsgliedes (12) und der Schließwinkel (α) der Klingen (5, 6) voneinander abhängig sind.

3. Schere nach Anspruch 2,
**dadurch gekennzeichnet, dass** der translatorische Stellweg (31) des Betätigungsgliedes (12) zum Schließwinkel (α) der Klingen (5, 6) proportional ist.

4. Schere nach Anspruch 1,
**dadurch gekennzeichnet, dass** der Führungskörper (22) in einer Kulisse (16) aufgenommen ist, die im Gehäuse (3) der Schere (1) liegt.

5. Schere nach Anspruch 1,
**dadurch gekennzeichnet, dass** der Führungskörper (22) zwischen einer ersten Führungsbahn (18) und einer zweiten Führungsbahn (19) geführt ist, die einander gegenüberliegen und sich längs des Stellweges (31) erstrecken.

6. Schere nach Anspruch 5,
**dadurch gekennzeichnet, dass** der Führungskörper (22) mit Spiel (x, y) zwischen den Führungsbahnen (18, 19) liegt und sich der Führungskörper (22) an dem einen Ende (23) mit einem ersten Abstützglied (24) an der ersten Führungsbahn (18) und an dem anderen Ende (21) mit einem zweiten Abstützglied (25) an der zweiten Führungsbahn (19) abstützt.

7. Schere nach Anspruch 6,
**dadurch gekennzeichnet, dass** das erste Abstützglied (24) auf der einen Seite einer Längsmittelachse (33) des Führungskörpers (22) und das zweite Abstützglied (25) auf der anderen Seite der Längsmittelachse (33) liegen.

8. Schere nach Anspruch 6,
**dadurch gekennzeichnet, dass** das Abstützglied (24, 25) eine Rolle (32) ist.

9. Schere nach Anspruch 1,
**dadurch gekennzeichnet, dass** an einem Ende (21) des Führungskörpers (22) eine Rückstellkraft (F) eingeleitet wird.

10. Schere nach Anspruch 9,
**dadurch gekennzeichnet, dass** der Krafteinleitungspunkt (30) der Rückstellkraft (F) in einem Abstand (a) zur Längsmittelachse (33) des Führungskörpers (22) liegt.

11. Schere nach Anspruch 1,
**dadurch gekennzeichnet, dass** das Betätigungsglied (12) einteilig mit dem Führungskörper (22) ausgebildet ist.

12. Schere nach Anspruch 11,
**dadurch gekennzeichnet, dass** das Betätigungsglied (12) durch einen Schlitz (17) in der Kulisse (16) ragt und der Anfang und das Ende des Schlitzes einen vorderen Anschlag (37) und einen hinteren Anschlag (38) für den translatorischen Verschiebeweg des Betätigungsgliedes (12) bilden.
